# EUROPÄISCHE PATENTSCHRIFT

(11) **EP 2 222 514 B1**
(45) Veröffentlichungstag und Bekanntmachung des Hinweises auf die Patenterteilung: **09.01.2013**
(21) Anmeldenummer: 08852943.3
(22) Anmeldetag: 20.11.2008
(51) Int. Cl.: B60R 21/20, B60R 11/00, B60R 11/02

(54) **AIRBAG-SATELLIT**
AIRBAG SATELLITE
SATELLITE D'AIRBAG

(30) Priorität: 22.11.2007 DE 102007056227
(43) Veröffentlichungstag der Anmeldung: 01.09.2010
(73) Patentinhaber: Continental Automotive GmbH, 30165 Hannover (DE)
(72) Erfinder: CHRISTOPH, Markus, 93055 Regensburg (DE); PLANKL, Christian, 93055 Burgweinting (DE)
(86) Internationale Anmeldenummer: PCT/EP2008/065895
(87) Internationale Veröffentlichungsnummer: WO 2009/065887

(56) Entgegenhaltungen:
- EP-A- 1 350 962
- EP-A- 1 925 508
- DE-A1-102004 007 353
- DE-U1-202005 019 961

## Beschreibung

Die Erfindung betrifft einen Airbag-Satelliten und seine Befestigung in einem Fahrzeug.

Als Airbag-Satelliten sind beispielsweise Seitenairbag-Drucksatelliten bekannt, die derzeit in einem Fahrzeug in der Tür im Nass- oder Trockenraum verschraubt oder vernietet werden. Da es sich um sicherheitsrelevante Bauteile handelt soll der korrekte Verbau sichergestellt und dokumentiert werden können.

Derzeitige aus dem Stand der Technik bekannte Seitenairbag-Satelliten werden für die Befestigung im Fahrzeug durch zusätzliche Montagemittel, wie Schrauben und Nieten ausgelegt. Üblicherweise werden sie, wie zuvor beschrieben, im Fahrzeug in der Tür im Nass- oder Trockenraum verschraubt oder vernietet. Diese Art der Befestigung dient zugleich auch der Dokumentation des Verbaus beim Fahrzeughersteller durch beispielsweise Messung und Überwachung des Drehmoments bzw. der Verwendung der Nietzange.

Das Gehäuse ist in der Regel ein Kunststoffteil und kann für die Befestigung im Fahrzeug alternativ auch ohne zusätzliche Montagemittel, d.h. ohne Schrauben oder Nieten, ausgelegt werden. Die Befestigung kann dabei beispielsweise durch Einhängen bzw. Einschnappen des Seitenairbag-Satelliten erfolgen oder durch Befestigen des Seitenairbag-Satelliten über eine Art Bajonettverschluss usw.. Allerdings entfällt hierbei die sichere Dokumentation des Verbaus.

Die EP 1 350 962 A1 offenbart eine Baugruppe aus einem Lenkrad mit einem ersten Rastelement und aus einem Gassackmodul mit einem zweiten Rastelement, wobei das Lenkrad und das Gassackmodul so gegeneinander bewegbar sind, dass das erste und das zweite Rastelement eine Rastverbindung eingehen können.

In der Baugruppe ist ein Kontrollmittel integriert, so dass das Kontrollmittel, das Lenkrad, das Gassackmodul, das erste und das zweite Rastmittel so ausgebildet und so aufeinander abgestimmt sind, dass das Kontrollmittel nicht aus der Baugruppe entfernbar ist, wenn sich die Baugruppe in einem nicht korrekt verriegelten Zustand befindet, und das Kontrollmittel aus der Baugruppe entfernbar ist, wenn sich die Baugruppe in einem korrekt verriegelten Zustand befindet.

Demnach ist es die Aufgabe der vorliegenden Erfindung, einen Airbag-Satelliten mit einer vereinfachten Befestigung bereitzustellen, die einerseits auf die Verwendung von Schrauben oder Nieten im Wesentlichen verzichten kann und des Weiteren eine Dokumentation des Verbaus zulässt.

Diese Aufgabe wird durch einen Airbag-Satelliten mit den Merkmalen des Patentanspruchs 1 gelöst.

Demgemäß wird erfindungsgemäß ein Airbag-Satellit zum Einrasten bzw. Einhängen in einer Wandöffnung bereitgestellt, wobei der Airbag-Satellit ein Blockadeelement aufweist, das einen Stecker blockiert und das derart ausgebildet ist, dass es eine Überprüfung des korrekten Einbaus des Airbag-Satelliten ermöglicht, wobei die Blockade des Steckers durch das Blockadeelement aufgehoben wird, wenn die Überprüfung ergibt, dass der Airbag-Satellit korrekt eingebaut ist.

Der erfindungsgemäße Airbag-Satellit hat dabei den Vorteil, dass er in eine Wandöffnung eingehängt bzw. eingerastet werden kann. Dadurch kann auf die Verwendung von Schrauben bzw. Nieten zur Befestigung des Airbag-Satelliten verzichtet werden und Kosten bei Fertigung und Montage eingespart werden. Des Weiteren ermöglicht der Airbag-Satellit eine Überprüfung und Dokumentation, ob er richtig moniert wurde oder nicht. Hierzu weist der erfindungsgemäße Airbag-Satellit ein Blockadeelement auf, das einen Stecker des Airbag-Satelliten blockiert, so dass dieser nicht an eine Steuereinheit eines Fahrzeugs angeschlossen werden kann, bevor nicht überprüft wurde, ob der Airbag-Satellit richtig im Fahrzeug montiert wurde. Hierzu ist das Blockadeelement derart ausgebildet, dass es eine Überprüfung der korrekten Montage des Airbag-Satelliten erlaubt und die Blockade des Steckers aufhebt, wenn festgestellt wird, dass der Airbag-Satellit korrekt eingebaut ist. Auf diese Weise kann einfach und zuverlässig bestimmt werden, ob der Airbag-Satellit richtig montiert wurde, obwohl er zum Befestigen nur eingehängt bzw. eingerastet wurde.

Vorteilhafte Ausgestaltungen und Weiterbildungen der Erfindung ergeben sich aus den Unteransprüchen sowie der Beschreibung unter Bezugnahme auf die Zeichnungen.

In einer erfindungsgemäßen Ausführungsform weist der Airbag-Satellit eine Schnappereinrichtung mit einem Schnapphakenelement auf. Die Schnappereinrichtung bzw. der Schnapphaken ist derart ausgebildet, dass der Airbag-Satellit in einer Wandöffnung einschnappen bzw. einrasten kann, um den Airbag-Satellit in der Wandöffnung zu fixieren. Dies hat den Vorteil, dass der Airbag-Satellit auf diese Weise schnell und kostengünstig montiert werden kann und auf Schrauben und Nieten verzichtet werden kann, die zusätzliche Kosten verursachen würden und insbesondere langwierig zu montieren wären.

In einer vorteilhaften Weiterbildung der Erfindung ist an dem Schnapphakenelement als Blockadeelement eine Lasche mit einer Sollbruchstelle vorgesehen. Die Lasche ist dabei derart geformt, dass sie den Stecker des Airbag-Satelliten blockiert bzw. entsprechend abdeckt und den Stecker erst dann freigibt, wenn die Lasche an der Sollbruchstelle abgebrochen ist. Dies hat den Vorteil, dass ein Arbeiter den Airbag-Satelliten nicht einfach montieren und den Stecker mit einem entsprechenden Gegenstecker verbinden kann, solange nicht überprüft wurde, ob der Airbag-Satellit richtig montiert ist.

In weiterer erfindungsgemäßer Weiterbildung ist die Lasche mit der Sollbruchstelle derart ausgebildet, dass sie bei einer vorbestimmten Zugkraft bricht, wenn der Airbag-Satellit korrekt eingebaut ist. In diesem Fall sitzt der Airbag-Satellit ausreichend fest in der Wand, so dass die Lasche an der Sollbruchstelle abbrechen kann. Die Lasche bricht dagegen nicht ab, wenn der Airbag-Satellit falsch eingebaut ist, da er sich in diesem Fall durch die Zugkraft aus der Verankerung herausziehen und "demontieren" lässt.

In vorteilhafter Weiterbildung der Erfindung ist die abgebrochene Lasche derart in den Airbag-Satelliten einführbar, dass das Schnapphakenelement dadurch blockiert wird. Dies hat den Vorteil, dass durch die Blockierung des Schnapphakens der Airbag-Satellit nicht demontiert werden kann. Erst wenn die abgebrochene Lasche entfernt wird, kann der Airbag-Satellit entfernt werden.

In weiterer vorteilhafter Weiterbildung kann die abgebrochene Lasche bis zu einem vorbestimmten Anschlag in den Airbag-Satelliten eingeführt werden, wobei der Anschlag beispielsweise derart gewählt ist, dass er eine gewünschte Endposition des Airbag-Satelliten markiert. Kann die abgebrochene Lasche hierbei nicht bis zum Anschlag eingeführt werden, so kann hierdurch ermittelt werden, dass der Airbag-Satellit nicht richtig montiert ist, da er seine Endposition nicht erreicht hat.

In einer weiteren erfindungsgemäßen Ausführungsform ist an dem Schnapphakenelement als Blockadeelement ein Keilelement mit einer Sollbruchstelle vorgesehen. Das Keilelement ist hierbei derart ausgebildet, dass es den Stecker des Airbag-Satelliten blockieren kann und den Stecker freigibt, wenn das Keilelement an der Sollbruchstelle abgebrochen ist. Zur Überprüfung der richtigen Montage des Airbag-Satelliten wird dabei das Keilelement mit einer vorbestimmten Druckkraft beaufschlagt. Bricht das Keilelement ab und kann es wahlweise zusätzlich bis zu einem vorbestimmten Anschlag in den Airbag-Satelliten eingeführt werden, so ist der Airbag-Satellit richtig montiert bzw. hat seine Endposition erreicht. Bricht das Keilelement nicht ab, weil sich der gesamte Airbag-Satellit aus seiner Halterung löst, so ist der Airbag-Satellit falsch montiert.

In einer weiteren erfindungsgemäßen Ausführungsform ist als Blockadeelement ein Etikett mit wenigstens einer Sollbruchstelle und einer Lasche zum daran Ziehen vorgesehen. Das Etikett deckt dabei zunächst den Stecker geeignet ab, so dass dieser nicht mit einem Gegenstecker verbunden werden kann, wobei die Lasche in vorteilhafter Weise an der Außenseite des Steckers angeformt sein kann. Zum Überprüfen der Montage des Airbag-Satelliten muss an dem Etikett bzw. der Lasche gezogen werden. Diese reißt nur dann ab, wenn der Airbag-Satellit richtig montiert ist und entsprechend fest sitzt. Ist der Airbag-Satellit dagegen nicht richtig montiert, so löst sich der Airbag-Satellit durch das Ziehen an der Lasche aus seiner Verankerung und die Lasche reißt nicht. Das Etikett hat den Vorteil, dass es einfach und kostengünstig als Blockadeelement vorgesehen werden kann.

Zur besseren Dokumentation kann das Blockadeelement bzw. dessen entfernbarer Teil mit einem Code, wie beispielsweise einem Data-Matrix Code, beschriftet sein. Dieser kann für die Dokumentation elektronisch eingelesen und abgespeichert werden. Alternativ oder zusätzlich kann das abgerissene bzw. abgebrochene Blockadeelement für Dokumentationszwecke auch aufbewahrt werden.

Die Erfindung wird nachfolgend anhand der in den schematischen Figuren der Zeichnungen angegebenen Ausführungsbeispiele näher erläutert. Es zeigen:
- Fig. 1a: eine Seitenansicht eines in eine Autotür eingebauten Seitenairbag-Satelliten gemäß einer ersten Ausführungsform der Erfindung;
- Fig. 1b: eine Perspektivansicht des eingebauten Seitenairbag-Satelliten gemäß Fig. 1a;
- Fig. 1c: ein vergrößerter Ausschnitt eines Blockadeelements gemäß der ersten Ausführungsform der Erfindung;
- Fig. 1d: eine Perspektivansicht des Seitenairbag-Satelliten gemäß Fig. 1, wobei das Blockadeelement einen Schnapphaken des Satelliten blockiert;
- Fig. 2a: eine Perspektivansicht eines eingebauten Seitenairbag-Satelliten gemäß einer zweiten Ausführungsform der Erfindung;
- Fig. 2b: der Seitenairbag-Satellit gemäß Fig. 2a, wobei dieser einer Druckprüfung unterzogen wird;
- Fig. 2c: der Seitenairbag-Satellit gemäß Fig. 2a, wobei ein Schnapphaken des Satelliten nach der Druckprüfung verriegelt ist; und
- Fig. 3: eine Perspektivansicht eines eingebauten Seitenairbag-Satelliten gemäß einer dritten Ausführungsform der Erfindung.

In allen Figuren sind gleiche bzw. funktionsgleiche Elemente und Vorrichtungen - sofern nichts anderes angegeben ist - mit denselben Bezugszeichen versehen worden. Die vorliegende Erfindung wird dabei im Nachfolgenden anhand des Beispiels eines Seitenairbag-Satelliten näher erläutert, der beispielsweise in eine Autotür eingebaut wird. Grundsätzlich gilt die Erfindung aber für alle Arten von Airbags bzw. Airbag-Satelliten und Befestigungsorte solcher Airbags bzw. Airbag-Satelliten. Erfindungsgemäß sind Airbags und entsprechende Airbag-Satelliten mit umfasst, die im Armaturenbrett, dem Lenkrad, den Fahrzeugsäulen, dem Boden, dem Dach, den Türen, den Sitzen, den Kopfstützen usw. verbaut werden, um nur einige Beispiele zu nennen.

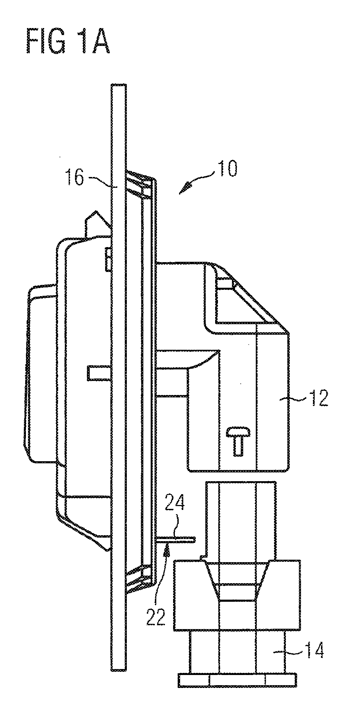

In Fig. 1a ist eine Seitenansicht eines in eine Autotür eingebauten Seitenairbag-Satelliten 10 gemäß einer ersten Ausführungsform der Erfindung gezeigt. Der Seitenairbag-Satellit 10 dient dazu, wenigstens einen oder mehrere Parameter zu erfassen, aus denen auf einen Aufprall geschlossen werden kann. Hierbei kann der Seitenairbag-Satellit 10 beispielsweise einen Druckunterschied oder eine Druckveränderung feststellen in dem Raum in dem er angeordnet ist, um nur ein Beispiel für eine Vielzahl von Parametern zu nennen, die durch einen Airbag-Satelliten bestimmt werden können. Die Erfindung ist nicht auf dieses spezielle Beispiel beschränkt sondern auf alle Arten von Airbags bzw. Airbag-Satelliten anwendbar.

Die von dem Seitenairbag-Satelliten 10 bestimmten Parameter leitet dieser beispielsweise an eine zentrale Steuereinrichtung (nicht dargestellt) weiter, die diese Information beispielsweise auswertet und bestimmt, ob der Seitenairbag ausgelöst wird oder nicht. Hierzu wird der Seitenairbag-Satellit 10 mit der zentralen Steuereinrichtung verbunden. Der Seitenairbag-Satellit 10 weist hierzu einen entsprechenden Stecker 12 auf, der mit einem entsprechenden Gegenstecker 14 verbunden wird bzw. über den Gegenstecker 14 an der zentralen Steuereinrichtung angeschlossen wird.

Der erfindungsgemäße Seitenairbag-Satellit 10 wird im Folgenden, wie in den Fig. 1a bis 1d gezeigt ist, in die Öffnung in einer Tür, beispielsweise einer Trennwand 16, eingehängt bzw. über ein Schnapphakenelement 18 einer Schnappereinrichtung 20 des Satelliten 10 eingeschnappt.

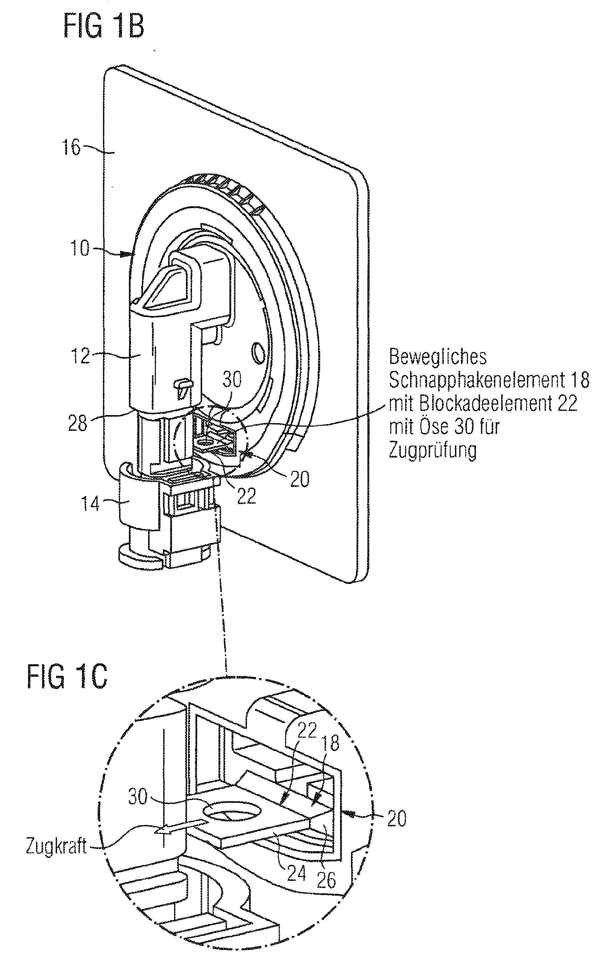

Wie in Fig. 1b und dem vergrößerten Ausschnitt in Fig. 1c gezeigt ist, kann die Schnappereinrichtung 20 bzw. deren Schnapphakenelement 18 mit einem Blockadeelement 22, beispielsweise in Form einer Lasche 24, verlängert werden, welche eine Sollbruchstelle 26 aufweist. Die Lasche 24 ist dabei so ausgestaltet, dass sie den Zugang zum Steckgesicht 28 des Steckers 12 zumindest teilweise oder vollständig verdeckt, wie in Fig. 1a und 1b dargestellt ist, so dass ein Aufstecken des Gegensteckers 14 verhindert wird, solange der Seitenairbag-Satellit 10 nicht auf seinen korrekten Einbau hin überprüft ist. Das gilt auch, wenn der Seitenairbag-Satellit 10 im Fahrzeug richtig verbaut ist. Erst muss der korrekte Einbau geprüft werden, beispielsweise mittels einer Zugprüfung an der Lasche 24, bevor eine Verbindung mit dem Gegenstecker 14 möglich ist.

Dies kann beispielsweise mit Hilfe eines Werkzeugs oder einer Zugprüfungseinrichtung (nicht dargestellt) erfolgen. Hierzu kann die Lasche 24 beispielsweise zusätzlich mit einer Öffnung 30 versehen sein, wie in den Fig. 1b und 1c gezeigt ist, an der eine Zugprüfungseinrichtung eingehängt werden kann. Dies ist jedoch lediglich ein Beispiel und die Erfindung ist nicht auf diese spezielle Ausführungsform beschränkt.

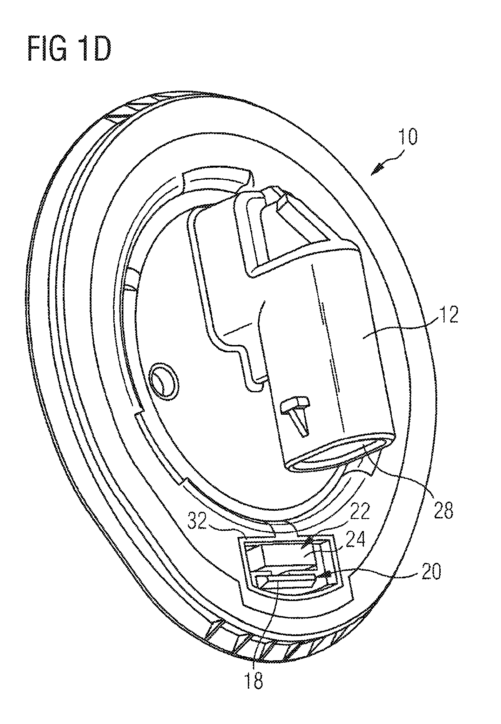

Ist der Seitenairbag-Satellit 10 ordnungsgemäß verbaut, wie in Fig. 1d dargestellt ist, so bricht die Lasche 24 bei einer durch die Zugprüfungseinrichtung aufgebrachten definierten Kraft ab. Diese Zugkraft ist hierbei beispielsweise niedriger als die maximal zulässige Kraft für das Schnapphakenelement 18. Durch die Zugprüfung kann festgestellt werden, ob der Seitenairbag-Satellit 10 in die Öffnung der Wand 16 korrekt eingehängt wurde und die Schnappereinrichtung 20 korrekt eingeschnappt ist. Ist der Seitenairbag-Satellit 10 dagegen nicht korrekt verbaut, d.h. befindet er sich in einer Art halbgesteckten bzw. halbeingeschnappten Position, so dass er zwar zunächst im Fahrzeug hält, sich jedoch über die Lebensdauer lockern könnte, so löst sich der Seitenairbag-Satellit 10 aus seiner Verankerung während der Zugprüfung, ohne dass dabei die Lasche 24 bricht. In diesem Fall wird der Seitenairbag-Satellit 10 praktisch durch die Zugprüfung zumindest teilweise oder im Wesentlichen vollständig demontiert bzw. aus seiner ursprünglichen Position gelöst. In diesem Fall kann eine Montage des Gegensteckers 14 durch das Nichtbrechen der Lasche 24 wirksam verhindert werden.

Erst nachdem der Seitenairbag-Satellit 10 korrekt eingebaut ist und die Lasche 24 ordnungsgemäß in der Zugprüfung an ihrer Sollbruchstelle 26 abgebrochen ist, wie in Fig. 1d gezeigt ist, ist das Aufstecken des Gegensteckers 14 möglich bzw. freigegeben. Auf diese Weise kann dokumentiert und nachvollzogen werden, ob der Seitenairbag-Satellit 10 korrekt eingebaut wurde oder nicht.

Wahlweise kann die Lasche 24 zusätzlich mit einem Data-Matrix Code beschriftet werden. Die Lasche 24 kann dann für Dokumentationszwecke aufbewahrt bzw. der Inhalt elektronisch eingelesen und gespeichert werden. Dies gilt für alle erfindungsgemäßen Ausführungsformen, wie sie im nachfolgenden weiter beschrieben werden.

Ebenso ist es möglich, wie Fig. 1d weiter zeigt, die nach der korrekten Montage und der obligatorischen Zugprüfung abgerissene Lasche 24 zwischen das bewegliche Schnapphakenelement 18 und die stabile Seitenwand 32 einzuklemmen. Dadurch ergibt sich eine Blockade des Schnapphakenelements 18, das dann nicht mehr betätigt werden kann. Aufgrund des verriegelten Schnapphakenelements 18, kann der Seitenairbag-Satellit 10 nicht ungewollt entfernt werden. Eine Demontage desselben ist erst nach Entfernen des Laschenteils wieder möglich.

Sollte die Endlage des Seitenairbag-Satelliten 10 nicht erreicht werden können, z.B. aufgrund fehlerhafter Abmessungen am Einbauort, so kann die abgebrochene Lasche 24 nicht wie in Fig. 1d gezeigt ist zwischen das Schnapphakenelement 18 und eine Wand 32 des Airbag-Satelliten 10 gedrückt werden (Übermaß). Auf diese Weise kann zusätzlich festgestellt und dokumentiert werden, dass der Seitenairbag-Satellit 10 nicht korrekt eingebaut ist.

Es ist außerdem nicht möglich, zunächst die Lasche 24 abzubrechen und dann zwischen das Schnapphakenelement 18 und eine Seitenwand 32 des Airbag-Satelliten 10 zu klemmen und anschließend den Seitenairbag-Satelliten 10 vollständig zu montieren. Das Schnapphakelement 18 bzw. die Schnappereinrichtung 20 ist in diesem Fall durch das eingeschobene Laschenstück 24 nicht mehr beweglich und kann mit dem Seitenairbag-Satellit 10 daher nicht montiert werden, da er nicht in der Öffnung der Wand 16 einschnappen und so den Seitenairbag-Satellit 10 darin korrekt befestigen kann.

In einer weiteren alternativen Ausführungsform kann das Blockadeelement 22, hier die Lasche 24, auch an dem Steckerteil 12 selbst angebracht sein, wobei es das Steckergesicht 28 des Steckers 12 soweit abdeckt, dass der Gegenstecker 14 nicht auf den Stecker 12 aufgesteckt werden kann. Die Funktionsweise der Lasche ist hierbei im Wesentlichen identisch zu der zuvor beschriebenen Lasche 24. Es muss zunächst eine Zugprüfung an der Lasche durchgeführt werden. Erst wenn die Lasche hierbei wie vorbestimmt abbricht, kann der Seitenairbag-Satellit 10 als korrekt eingebaut definiert werden, wobei eine zusätzliche Überprüfung stattfinden kann, indem die Lasche, wie zuvor beschrieben wurde, zwischen das Schnapphakenelement 18 und der Wand 32 eingesteckt wird.

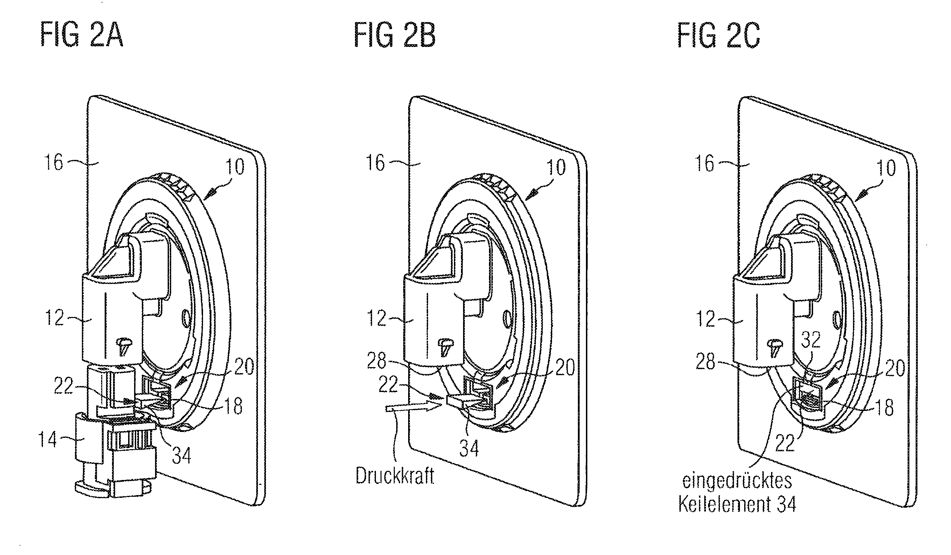

In den Fig. 2a bis 2c ist eine zweite erfindungsgemäße Ausführungsform des Airbag-Satelliten 10 dargestellt.

Wie in Fig. 2a gezeigt ist, befindet sich an dem Seitenairbag-Satelliten 10 eine bewegliche Schnappereinrichtung 20, die zur Befestigung in einer Öffnung in einer Wand 16 verwendet wird. Das Schnapphakenelement 18 kann so ausgestaltet sein, dass zusätzlich ein Blockadeelement 22 in Form einer Art Keilelement 34 mit einer Sollbruchstelle an ihm ausgebildet ist.

Vorzugsweise ist das Keilelement 34 so ausgestaltet, dass es den Zugang zum Steckgesicht 28 des Steckers 12 zumindest teilweise oder vollständig verdeckt, so dass ein Aufstecken des Gegensteckers 14 verhindert wird, wie in Fig. 2a gezeigt ist.

Im Gegensatz zu der ersten Ausführungsform, ist das Blockadeelement 22, hier das Keilelement 34, derart ausgebildet, dass eine Druckprüfung und keine Zugprüfung durchgeführt wird, um festzustellen, ob der Seitenairbag-Satellit 10 korrekt eingebaut ist oder nicht.

Selbst wenn also der Seitenairbag-Satellit 10 im Fahrzeug richtig verbaut ist, kann der Gegenstecker 14 noch nicht montiert werden. Es muss zuerst eine Druckkraft auf das Keilelement 34 aufgebracht werden, wie in Fig. 2b dargestellt ist.

Ist der Seitenairbag-Satellit 10 dabei ordnungsgemäß verbaut, so bricht das Keilelement 34 an der Sollbruchstelle bei einer vorbestimmten, definierten Kraft ab. Das Keilelement 34 wird dann zwischen das beweglichen Schnapphakenelement 18 und die stabile Wand 32 eingeschoben und eingeklemmt, wie in Fig. 2c gezeigt ist. Dadurch ergibt sich eine Blockade des Schnapphakenelements 18, das dann nicht mehr betätigt werden kann. Erst dann ist der Weg für das Aufstecken des Gegensteckers 14 freigegeben. Eine Demontage des Seitenairbag-Satelliten 10 ist wiederum erst nach Entfernen des Keilelements 34 möglich.

In dem Fall, dass der Satellit 10 in einer halbgesteckten Position ist, so dass er zwar zunächst in der Fahrzeugwand 16 hält, sich jedoch über die Lebensdauer lockern könnte, so wird er durch die zusätzlich aufgebrachte Druckkraft im Druckprüfungsversuch endgültig in die Endlage gedrückt und das Keilelement 34 kann in seine Endposition rutschen.

Kann die Endlage dabei jedoch nicht erreicht werden, beispielsweise durch fehlerhafte Einbaumaße am Einbauort, so kann das Keilelement 34 nicht zwischen das Schnapphakenelement 18 und die Wand 32 gedrückt werden (Übermaß). Dadurch kann festgestellt und dokumentiert werden, dass der Seitenairbag-Satellit 10 nicht korrekt eingebaut ist.

Ebenso ist es nicht möglich, den Seitenairbag-Satelliten 10 zu montieren, wenn zuerst das Keilelement 34 abgebrochen, eingedrückt und dann zwischen das Schnapphakenelement 18 und die Wand 32 geklemmt wird. Die Schnappereinrichtung 20 bzw. das Schnapphakenelement 18 ist dann nicht mehr beweglich und der Seitenairbag-Satellit 10 kann nicht montiert werden, da die Schnappereinrichtung 20 nicht in der Öffnung der Wand 16 wie vorgeschrieben einschnappen kann.

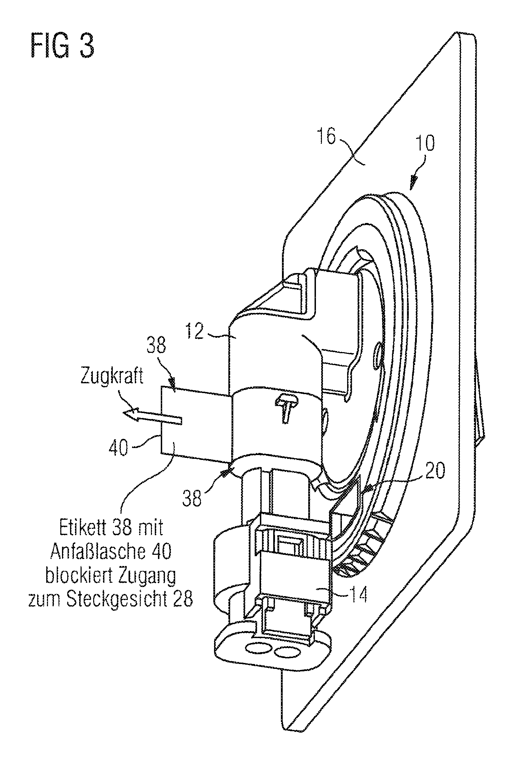

In Fig. 3 ist eine dritte erfindungsgemäße Ausführungsform des erfindungsgemäßen Airbag-Satelliten 10 dargestellt.

An diesem Seitenairbag-Satelliten 10 befindet sich ein Blockadeelement 22 in Form eines Etiketts 38 mit wenigstens einer Sollbruchstelle und einer Lasche 40 zum Ziehen. Das Etikett 38 ist beispielsweise um den Stecker 12 angebracht oder an diesen angeformt, wie in Fig. 3 gezeigt ist, um das Aufstecken des Gegensteckers 14 zu verhindern. Selbst wenn der Seitenairbag-Satellit 10 im Fahrzeug richtig verbaut ist kann der Gegenstecker 14 somit zunächst nicht montiert werden. Es muss zuerst eine Zugprüfung an dem Etikett 38 erfolgen, um Festzustellen und zu dokumentieren, dass der Seitenairbag-Satellit 10 korrekt montiert ist.

Ist der Seitenairbag-Satellit 10 ordnungsgemäß verbaut, d.h. schnappt beispielsweise das Schnapphakenelement 18 der Schnappereinrichtung 20 in der Wandöffnung 16, wie vorgeschrieben ein, so reißt das Etikett 38 bei einer definierten Kraft ab, da der Seitenairbag-Satellit 10 einen entsprechenden Widerstand aufgrund seinem korrekten Verbau in der Wandöffnung 16 ausübt. Mit anderen Worten der Seitenairbag-Satellit 10 sitzt fest in der Wandöffnung 16. Die vorbestimmte Zugkraft in der Zugprüfung, die auf das Etikett 38 wirkt, ist beispielsweise niedriger als die maximal zulässige Kraft für das Schnapphakenelement 18. Erst dann ist der Weg für das Aufstecken des Gegensteckers 14 freigegeben, da das Etikett 38 abgerissen wird und den Zugang zu dem Steckergesicht 28 des Steckers 12 freigibt.

Ist der Seitenairbag-Satellit 10 dagegen beispielsweise in einer halbgesteckten bzw. halbmontierten Position, so dass er zwar zunächst in der Wandöffnung 16 im Fahrzeug hält, sich jedoch über die Lebensdauer lockern könnte, dann wird er durch diese Zugprüfung demontiert bzw. aus seiner Position gelöst, wobei das Etikett 38 dabei nicht abreißt, da der Seitenairbag-Satellit 10 nicht genug Widerstand leisten kann, als wenn er korrekt montiert und fest in der Wandöffnung sitzt. Der Gegenstecker 14 kann in diesem Fall nicht montiert werden.

Wahlweise kann das Etikett 38 zusätzlich mit einem Code, wie einem Data-Matrix Code, beschriftet werden. Das Etikett 38 kann dann für Dokumentationszwecke aufbewahrt bzw. der Inhalt elektronisch eingelesen und gespeichert werden.

Die Vorteile der vorgenannten Ausführungsformen bestehen darin, dass Befestigungselemente, wie Schrauben und Nieten, zur zusätzlichen Dokumentation bzw. zur zusätzlichen Prüfung der Montage entfallen können. Des Weiteren benötigt beispielsweise die erste bis dritte Ausführungsform nur wenige Einzelteile, wobei außerdem die Kosten für alle drei Ausführungsformen relativ gering sind, insbesondere im Vergleich zu den bekannten Befestigungsmöglichkeiten mit Schrauben und Nieten. Darüber hinaus ist das Prüfungsverfahren vereinfacht.

## Patentansprüche

1. Airbag-Satellit (10) zum Einrasten bzw. Einhängen in einer Wandöffnung (16), wobei der Airbag-Satellit (10) ein Blockadeelement (22) aufweist, das einen Stecker (12) blockiert und das derart ausgebildet ist, dass es eine Überprüfung des korrekten Einbaus des Airbag-Satelliten (10) ermöglicht, wobei die Blockade des Steckers (12) durch das Blockadeelement (22) aufgehoben wird, wenn die Überprüfung ergibt, dass der Airbag-Satellit (10) korrekt eingebaut ist.

2. Airbag-Satellit nach Anspruch 1,
**dadurch gekennzeichnet,**
**dass** der Airbag-Satellit (10) eine Schnappereinrichtung (20) mit einem Schnapphakenelement (18) aufweist, welches in einer Wandöffnung (16) einschnappen bzw. einrasten kann, um den Airbag-Satellit (10) in der Wandöffnung (16) zu fixieren.

3. Airbag-Satellit nach Anspruch 2,
**dadurch gekennzeichnet,**
**dass** an dem Schnapphakenelement (18) als Blockadeelement (22) eine Lasche (24) mit einer Sollbruchstelle (26) vorgesehen ist, wobei die Lasche (24) derart ausgebildet ist, dass sie den Stecker (12) des Airbag-Satelliten (10) blockiert und den Stecker (12) freigibt, wenn die Lasche (24) an der Sollbruchstelle (26) abgebrochen ist.

4. Airbag-Satellit nach Anspruch 3,
**dadurch gekennzeichnet ,**
**dass** die Lasche (24) mit der Sollbruchstelle (26) derart ausbildet ist, dass sie bei einer vorbestimmten Zugkraft bricht, wenn der Airbag-Satellit (10) korrekt eingebaut ist und nicht bricht, wenn der Airbag-Satellit (10) falsch eingebaut ist.

5. Airbag-Satellit nach wenigstens einem der Ansprüche 3 bis 4,
**dadurch gekennzeichnet ,**
**dass** die abgebrochene Lasche (24) derart in den Airbag-Satelliten (10), beispielsweise bis zu einem vorbestimmten Anschlag, einführbar ist, so dass das Schnapphakenelement (18) dadurch blockiert wird.

6. Airbag-Satellit nach wenigstens einem der Ansprüche 3 bis 5,
**dadurch gekennzeichnet,**
**dass** wenn die Lasche (24) bis zum einem vorbestimmten Anschlag in den Airbag-Satelliten (10) einführbar ist, der Airbag-Satellit (10) korrekt montiert ist und wenn die Lasche (24) nicht bis zu dem vorbestimmten Anschlag in den Airbag-Satelliten (10) einführbar ist, der Airbag-Satellit (10) falsch eingebaut ist.

7. Airbag-Satellit nach Anspruch 2,
**dadurch gekennzeichnet,**
**dass** an dem Schnapphakenelement (18) als Blockadeelement (22) ein Keilelement (34) mit einer Sollbruchstelle vorgesehen ist, wobei das Keilelement (34) derart ausgebildet ist, dass es den Stecker (12) des Airbag-Satelliten (10) blockiert und den Stecker (12) freigibt, wenn das Keilelement (34) an der Sollbruchstelle abgebrochen ist.

8. Airbag-Satellit nach Anspruch 7,
**dadurch gekennzeichnet,**
**dass** das Keilelement (34) mit seiner Sollbruchstelle derart ausbildet ist, dass das Keilelement (34) bei einer vorbestimmten Druckkraft bricht und wahlweise zusätzlich bis zu einem vorbestimmten Anschlag in den Airbag-Satelliten (10) einführbar ist, wenn der Airbag-Satellit (10) korrekt eingebaut ist und nicht bricht und/oder nicht bis zu dem vorbestimmten Anschlag einführbar ist, wenn der Airbag-Satellit (10) falsch eingebaut ist.

9. Airbag-Satellit nach wenigstens einem der Ansprüche 1 bis 8,
**dadurch gekennzeichnet,**
**dass** als Blockadeelement (22) ein Etikett (38) mit wenigstens einer Sollbruchstelle und einer Lasche (40) zum daran Ziehen vorgesehen ist.

10. Airbag-Satellit nach Anspruch 9,
**dadurch gekennzeichnet,**
**dass** das Etikett (38) an der Außenseite des Steckers (12) angeformt ist.

11. Airbag-Satellit nach Anspruch 9 oder 10,
**dadurch gekennzeichnet,**
**dass** das Etikett (38) mit seiner Sollbruchstelle und der Lasche (40) derart ausbildet ist, dass das Etikett (38) bei einer vorbestimmten Zugkraft an der Lasche (40) abreißt, wenn der Airbag-Satellit (10) korrekt eingebaut ist und dabei den Stecker (12) freigibt und nicht abreißt, wenn der Airbag-Satellit (10) falsch eingebaut ist.

12. Airbag-Satellit nach wenigstens einem der Ansprüche 1 bis 11,
**dadurch gekennzeichnet,**
**dass** das Blockadeelement (22) bzw. dessen entfernbarer Teil mit einem Code, wie beispielsweise einem Data-Matrix Code, beschriftet ist, der elektronisch einlesbar und abspeicherbar ist.

13. Airbag-Satellit nach wenigstens einem der Ansprüche 1 bis 12,
**dadurch gekennzeichnet,**
**dass** der Stecker (12) des Airbag-Satelliten (10) mit einem Gegenstecker (14), beispielsweise einer zentralen Steuereinrichtung eines Fahrzeugs, verbindbar ist.

14. Fahrzeug mit wenigstens einem Airbag-Satelliten (10) nach wenigstens einem der Ansprüche 1 bis 13.

## Claims

1. Airbag satellite (10) to be latched and/or suspended in a wall opening (16), the airbag satellite (10) having a blocking element (22), which blocks a plug (12) and is configured so that it allows the correct installation of the airbag satellite (10) to be verified, the blocking of the plug (12) by the blocking element (22) being cancelled, if the verification shows that the airbag satellite (10) is correctly installed.

2. Airbag satellite according to claim 1,
**characterised in that**
the airbag satellite (10) has a snapper device (20) with a snap hook element (18), which can snap and/or latch in a wall opening (16), to fix the airbag satellite (10) in the wall opening (16).

3. Airbag satellite according to claim 2,
**characterised in that**
a strap (24) with a predetermined breaking point (26) is provided on the snap hook element (18) as the blocking element (22), the strap (24) being configured so that it blocks the plug (12) of the airbag satellite (10) and releases the plug (12) when the strap (24) is broken at the predetermined breaking point (26).

4. Airbag satellite according to claim 3,
**characterised in that**
the strap (24) with the predetermined breaking point (26) is configured so that it breaks at a predefined tensile force, when the airbag satellite (10) is correctly installed and does not break when the airbag satellite (10) is incorrectly installed.

5. Airbag satellite according to at least one of claims 3 to 4,
**characterised in that**
the broken strap (24) can be inserted into the airbag satellite (10), for example up to a predefined stop, so that it blocks the snap hook element (18).

6. Airbag satellite according to at least one of claims 3 to 5,
**characterised in that**
if the strap (24) can be inserted into the airbag satellite (10) up to a predefined stop, the airbag satellite (10) is correctly assembled and if the strap (24) cannot be inserted into the airbag satellite (10) up to the predefined stop, the airbag satellite (10) is not correctly installed.

7. Airbag satellite according to claim 2,
**characterised in that**
a wedge element (34) with a predetermined breaking point is provided on the snap hook element (18) as the blocking element (22), the wedge element (34) being configured so that it blocks the plug (12) of the airbag satellite (10) and releases the plug (12) when the wedge element (34) is broken at the predetermined breaking point.

8. Airbag satellite according to claim 7,
**characterised in that**
the wedge element (34) with its predetermined breaking point is configured so that the wedge element (34) breaks at a predefined compression force and can optionally also be inserted into the airbag satellite (10) up to a predefined stop when the airbag satellite (10) is correctly installed and does not break and/or cannot be inserted up to the predefined stop when the airbag satellite (10) is incorrectly installed.

9. Airbag satellite according to at least one of claims 1 to 8,
**characterised in that**
a tag (38) with at least one predetermined breaking point and a strap (40) for pulling is provided as the blocking element (22).

10. Airbag satellite according to claim 9,
**characterised in that**
the tag (38) is formed on the outside of the plug (12).

11. Airbag satellite according to claim 9 or 10,
**characterised in that**
the tag (38) with its predetermined breaking point and the strap (40) is configured so that the tag (40) tears when a predefined tensile force is applied to the strap (40) when the airbag satellite (10) is correctly installed, thereby releasing the plug (12) and does not tear when the airbag satellite (10) is incorrectly installed.

12. Airbag satellite according to at least one of claims 1 to 11,
**characterised in that**
the blocking element (22) and/or its removable part is marked with a code, for example a data matrix code, which can be read in electronically and stored.

13. Airbag satellite according to at least one of claims 1 to 12,
**characterised in that**
the plug (12) of the airbag satellite (10) can be connected to a mating plug (14), for example of a central control facility of a vehicle.

14. Vehicle having at least one airbag satellite (10) according to at least one of claims 1 to 13.

## Revendications

1. Satellite d'airbag (10) destiné à être encliqueté ou accroché dans une ouverture de paroi (16), lequel satellite d'airbag (10) comprend un élément de blocage (22) qui bloque une prise (12) et qui est conçu de manière à permettre une vérification du montage correct du satellite d'airbag (10), dans lequel le blocage de la prise (12) par l'élément de blocage (22) est annulé lorsque la vérification indique que le satellite d'airbag (10) a été monté correctement.

2. Satellite d'airbag selon la revendication 1, **caractérisé en ce que** le satellite d'airbag (10) présente un dispositif d'enclenchement (20) avec un élément formant crochet d'enclenchement (18) et qui peut s'enclencher ou s'encliqueter dans une ouverture de paroi (16) afin de fixer le satellite d'airbag (10) dans l'ouverture de paroi (16).

3. Satellite d'airbag selon la revendication 2, **caractérisé en ce qu'**une bride (24) avec un point de rupture (26) est prévue en tant qu'élément de blocage (22) sur l'élément formant crochet d'enclenchement (18), dans lequel la bride (24) est conçue de manière à bloquer la prise (12) du satellite d'airbag (10) et à libérer la prise (12) lorsque la bride (24) est cassée au niveau du point de rupture (26).

4. Satellite d'airbag selon la revendication 3, **caractérisé en ce que** la bride (24) avec le point de rupture (26) est conçue de manière à rompre sous une force de traction prédéterminée lorsque le satellite d'airbag (10) est monté correctement, et à ne pas rompre lorsque le satellite d'airbag (10) est monté incorrectement.

5. Satellite d'airbag selon au moins l'une quelconque des revendications 3 à 4, **caractérisé en ce que** la bride rompue (24) est insérable dans le satellite d'airbag (10), par exemple jusqu'à une butée prédéterminée, de manière à ce que l'élément formant crochet d'enclenchement (18) soit ainsi bloqué.

6. Satellite d'airbag selon au moins l'une quelconque des revendications 3 à 5, **caractérisé en ce que**, lorsque la bride (24) est insérable jusqu'à une butée prédéterminée dans le satellite d'airbag (10), le satellite d'airbag (10) est installé correctement, et lorsque la bride (24) n'est pas insérable jusqu'à la butée prédéterminée dans le satellite d'airbag (10), le satellite d'airbag (10) est alors monté incorrectement.

7. Satellite d'airbag selon la revendication 2, **caractérisé en ce qu'**un élément de calage (34) avec un point de rupture est prévu en tant qu'élément de blocage (22) sur l'élément formant crochet d'enclenchement (18), dans lequel l'élément de calage (34) est conçu de manière à bloquer la prise (12) du satellite d'airbag (10) et à libérer la prise (12) lorsque l'élément de calage (34) est rompu au niveau du point de rupture.

8. Satellite d'airbag selon la revendication 7, **caractérisé en ce que** l'élément de calage (34) est conçu de telle manière avec son point de rupture que l'élément de calage (34) rompt sous une force de pression prédéterminée, et au choix est en outre insérable dans le satellite d'airbag (10) jusqu'à une butée prédéterminée lorsque le satellite d'airbag (10) est monté correctement, et ne rompt pas et/ou n'est pas insérable jusqu'à la butée prédéterminée lorsque le satellite d'airbag (10) est monté incorrectement.

9. Satellite d'airbag selon au moins l'une quelconque des revendications 1 à 8, **caractérisé en ce qu'**une étiquette (38) avec au moins un point de rupture et une bride (40) est prévue en tant qu'élément de blocage (22) pour être tirée.

10. Satellite d'airbag selon la revendication 9, **caractérisé en ce que** l'étiquette (38) est formée sur le côté extérieur de la prise (12).

11. Satellite d'airbag selon la revendication 9 ou 10, **caractérisé en ce que** l'étiquette (38) est conçue de telle manière avec son point de rupture et la bride (40) que l'étiquette (38) se déchire sous une force de traction prédéterminée sur la bride (40) lorsque le satellite d'airbag (10) est monté correctement, libérant ainsi la prise (12), et ne se déchire pas lorsque le satellite d'airbag (10) est monté incorrectement.

12. Satellite d'airbag selon au moins l'une quelconque des revendications 1 à 11, **caractérisé en ce que** l'élément de blocage (22) ou sa partie détachable est marqué d'un code, tel que par exemple un code de matrice de données, qui est lisible et stockable électroniquement.

13. Satellite d'airbag selon au moins l'une quelconque des revendications 1 à 12, **caractérisé en ce que** la prise (12) du satellite d'airbag (10) est reliable à une prise homologue (14), par exemple un dispositif central de commande d'un véhicule.

14. Véhicule muni d'au moins un satellite d'airbag (10) selon au moins l'une quelconque des revendications 1 à 13.
